# EUROPEAN PATENT APPLICATION

(11) **EP 1 847 578 A1**
(43) Date of publication of application: **24.10.2007**
(21) Application number: 07007816.7
(22) Date of filing: 17.04.2007
(51) Int. Cl.: C09J 7/02, B32B 27/36

(54) **Base material for pressure-sensitive adhesive tape or sheet, pressure-sensitive adhesive tape or sheet having light-reflective property or light-shielding property and liquid crystal display apparatus**

(30) Priority: 17.04.2006 JP 2006113206
(71) Applicant: NITTO DENKO CORPORATION, Osaka (JP)
(72) Inventor: Yokoyama, Junji, Ibaraki-shi Osaka (JP); Otani, Mamoru, Ibaraki-shi Osaka (JP); Ikeda, Koichi, Ibaraki-shi Osaka (JP)
(74) Representative: Grünecker, Kinkeldey, Stockmair & Schwanhäusser Anwaltssozietät

(57) **Abstract**

The base material for a pressure-sensitive adhesive tape or sheet of the present invention is a different-colored laminated base material having a layered structure in which a plurality of film layers having different colors are laminated adjacently, and is used as a base material in a pressure-sensitive adhesive tape or sheet having a base material and a pressure-sensitive adhesive layer disposed on at least one surface of the base material. The base material for a pressure-sensitive adhesive tape or sheet is capable of providing the pressure-sensitive adhesive tape or sheet with a light-reflective property and/or a light-shielding property without requiring the formation of an ink layer and with an excellent tear resistance.

## Description

### FIELD OF THE INVENTION

The present invention relates to a base material for pressure-sensitive adhesive tape or sheet, a pressure-sensitive adhesive tape or sheet having light-reflective property or light-shielding property, and a liquid crystal display apparatus.

### BACKGROUND OF THE INVENTION

In so-called "mobile phones" and the like, a liquid crystal display module unit for an image display and a backlight unit are fixed with each other by a pressure-sensitive adhesive tape or sheet, and a pressure-sensitive adhesive tape or sheet having a reflective property or a light-shielding property is used for such purpose (cf. Patent References 1 to 12).
Patent Reference 1: JP-A-2004-59723
Patent Reference 2: JP-A-2002-235053
Patent Reference 3: JP-A-2002-350612
Patent Reference 4: JP-A-2004-161955
Patent Reference 5: JP-A-2004-184443
Patent Reference 6: JP-A-2004-231736
Patent Reference 7: JP-A-2004-231737
Patent Reference 8: JP-A-2004-156015
Patent Reference 9: JP-A-2004-244499
Patent Reference 10: JP-A-2002-249741
Patent Reference 11: JP-A-2004-53759
Patent Reference 12: JP-A-2002-23663

### SUMMARY OF THE INVENTION

As a conventional pressure-sensitive adhesive tape or sheet having a light-reflective property and/or a light-shielding property for use in fixing a liquid crystal display module unit and a backlight unit, employed commonly is a pressure-sensitive adhesive tape or sheet having a light-reflective property and/or a light-shielding property of a structure, which has a pressure-sensitive adhesive layer on at least a surface of a base material (on one surface or on both surfaces) and has a reflective layer and/or a light-shielding layer (such tape or sheet being also called "light-reflective/shielding pressure-sensitive adhesive tape or sheet"). Such light-reflective/shielding pressure-sensitive adhesive tape or sheet employs, as the light-reflective layer, for example a white-colored film layer and a white-colored ink layer formed by coating a white-colored ink on the white-colored film layer, and, as the light-shielding layer, for example a black-colored ink layer formed by coating a black-colored ink. Inks such as the white-colored ink and black-colored ink employed in the light-reflective layer and in the light-shielding layer generally contain a vinyl chloride-vinyl acetate copolymer as a binder component, and therefore involve a concern for the presence of chlorine component. Further, the inks contain, in addition to a crosslinking agent and a curing agent, low-molecular weight components such as a softener, a leveling agent, and a wax, and such low-molecular weight components may cause a bleed-out (oozing) to detrimentally affect the pressure-sensitive adhesive layer, possibly deteriorating the pressure-sensitive adhesive property. Moreover, for coating the ink, various printing methods are utilized, but it is in fact extremely difficult to completely avoid pinholes generated in the printing operation. Such pinhole generated in the ink layer causes a leakage of light, thus deteriorating the light-reflective property and the light-shielding property.

Additionally, in the light-reflective/shielding pressure-sensitive adhesive tape or sheet, the white-colored film layer is also utilized as the base material because an entire thickness is restricted, but it is easily torn (low in tear resistance) because of a small thickness of the base material. For example, in a case of adhesion to the liquid crystal display module unit or to the backlight unit, the tape or sheet once adhered is peeled off for re-positioning, it is easily torn.

Furthermore, as the black-colored ink generally employs inexpensive carbon black as the black-colored pigment, the black-colored ink layer as the light-shielding layer generally has an electrical conductivity. Such black-colored ink layer is normally formed between the base material (film layer in white color) and the pressure-sensitive adhesive layer and is not exposed to the surface, so that the electrical conductivity does not become a problem in such state. However, when a member having a pointed end (for example, an end portion of a soldered part) is adhered to the pressure-sensitive adhesive layer, the pointed end portion of such member may pierce the pressure-sensitive adhesive layer and reach the black-colored ink layer to cause electrical conduction, thereby causing a damage in the member, and a damage may also be caused in the apparatus or the part in which the light-reflective/shielding pressure-sensitive adhesive tape or sheet is used. Therefore, the electrical conductivity in the black-colored ink layer is also a problem.

Therefore, an object of the present invention is to provide a base material for a pressure-sensitive adhesive tape or sheet, capable of providing the pressure-sensitive adhesive tape or sheet with a light-reflective property and/or a light-shielding property without requiring to form an ink layer and with an excellent tear resistance; also to provide a pressure-sensitive adhesive tape or sheet having a light-reflective property and/or a light-shielding property, which includes the base material for the pressure-sensitive adhesive tape or sheet; and to provide a liquid crystal display apparatus which includes the pressure-sensitive adhesive tape or sheet having a light-reflective property and/or a light-shielding property.

Another object of the present invention is to provide a base material for a pressure-sensitive adhesive tape or sheet, capable of providing the pressure-sensitive adhesive tape or sheet with a low conductive property or a non-conductive property; also to provide a pressure-sensitive adhesive tape or sheet having a light-reflective property and/or a light-shielding property which includes the base material for the pressure-sensitive adhesive tape or sheet, and to provide a liquid crystal display apparatus which includes the pressure-sensitive adhesive tape or sheet having a light-reflective property and/or a light-shielding property.

As a result of intensive investigations undertaken by the present inventors, it is found that, by forming a pressure-sensitive adhesive tape or sheet utilizing, as a base material, a laminate including film layers showing different colors, a light-reflective property and/or a light-shielding property can be exhibited even without forming an ink layer, and that the tear resistance of the base material can also be improved. The present invention has been made based on these findings.

### DETAILED DESCRIPTION OF THE INVENTION

Namely, the present invention relates to the followings.
(1) A base material for a pressure-sensitive adhesive tape or sheet, comprising a plurality of film layers which have different colors and are laminated adjacently. (Hereinafter, this base material may be also referred as "different-colored laminated base material".)
(2) The base material according to (1), which is used in a pressure-sensitive adhesive tape or sheet including a base material and at least one pressure-sensitive adhesive layer disposed on at least one surface of the base material.
(3) The base material according to (1), which is formed by laminating a plurality of film layers having different colors adjacently by a multi-layer co-extrusion.
(4) The base material according to (1), which is formed by laminating a plurality of film layers having different colors adjacently by an adhesion through an adhesive layer or a pressure-sensitive adhesive layer.
(5) The base material according to (1), which has a film layer having a black color and a film layer having a white or silver color.
(6) The base material according to (1), which has a film layer having a white color and a film layer having a silver color.
(7) The base material according to (1), which has a film layer having a black color, a film layer having a silver color and a film layer having a white color layered in this order.
(8) The base material according to (1), which has a film layer having a white or silver color, a film layer having a black color and another film layer having a white or silver color layered in this order.
(9) The base material according to (1), wherein each of said film layers is formed by a polyethylene terephthalate film layer containing a colorant for showing a predetermined color.
(10) A pressure-sensitive adhesive tape or sheet having a light-reflective property and/or a light-shielding property, which comprises:
   the base material according to (1); and
   at least one pressure-sensitive adhesive layer disposed on at least one surface of the base material,
   wherein the pressure-sensitive adhesive tape or sheet has a reflectance of 60% or higher on at least one surface thereof and/or a transmittance of 0.3% or lower.
(11) The pressure-sensitive adhesive tape or sheet according to (10), which is for use in fixing a liquid crystal display module unit and a backlight unit.
(12) A liquid crystal display apparatus, which comprises:
   a liquid crystal display module unit;
   a backlight unit, and
   the pressure-sensitive adhesive tape or sheet according to (10), which fixes the liquid crystal display module unit and the backlight unit.

The different-colored laminated base material may be formed by laminating a plurality of film layers having different colors adjacently by a multi-layer co-extrusion, or by laminating a plurality of film layers having different colors adjacently by an adhesion through an adhesive layer or a pressure-sensitive adhesive layer.

The different-colored laminated base material is preferably a different-colored laminated base material having a layered structure of a film layer having a black color and a film layer having a white or silver color; a different-colored laminated base material having a layered structure of a film layer having a white color and a film layer having a silver color; a different-colored laminated base material having a layered structure of a film layer having a black color, a film layer having a silver color and a film layer having a white color layered in this order; or a different-colored laminated base material having a layered structure of a film layer having a white or silver color, a film layer having a black color and a film layer having a white or silver color layered in this order.

In the present invention, it is preferable that each of the film layers is formed by a polyethylene terephthalate film layer containing a colorant for showing a predetermined color.

The base material for a pressure-sensitive adhesive tape or sheet of the present invention, having the aforementioned structure, is capable of providing the pressure-sensitive adhesive tape or sheet with a light-reflective property and/or a light-shielding property without forming an ink layer, and also providing an excellent tear resistance. Additionally, the base material for a pressure-sensitive adhesive tape or sheet can provide the pressure-sensitive adhesive tape or sheet with a low conductive property or a non-conductive property.

Therefore, the light-reflective/shielding pressure-sensitive adhesive tape or sheet of the present invention, utilizing the aforementioned base material for a pressure-sensitive adhesive tape or sheet, does not contain a chlorine component derived from the ink, and also can prevent a decrease in the pressure-sensitive adhesive property caused by a bleeding-out of the ink and a decrease in the light-reflective property or in the light-shielding property by pinholes. Besides, because of the absence of the ink layer, the base material can be made thicker and is improved in the tear resistance, so that the tape or sheet can be peeled off without causing a tear, at the positioning at adhesion. Furthermore, even in a case that carbon black is employed as the black colorant, it is contained not in the ink layer but in the base material, so that a low conductive property or a non-conductive property can be exhibited effectively.

### Base material for pressure-sensitive adhesive tape or sheet

The base material for a pressure-sensitive adhesive tape or sheet of the present invention is a different-colored laminated base material having a layered structure in which a plurality of film layers having different colors are laminated adjacently, and is used as a base material in a pressure-sensitive adhesive tape or sheet having a base material and a pressure-sensitive adhesive layer disposed on at least one surface of the base material. The different-colored laminated base material is capable of providing the pressure-sensitive adhesive tape or sheet with a light-reflective property and/or a light-shielding property without forming an ink layer, and also providing an excellent tear resistance. Additionally, the different-colored laminated base material can provide the pressure-sensitive adhesive tape or sheet with a low conductive property or a non-conductive property.

The different-colored laminated base material is required to at least have a layered structure formed by a plurality of film layers having different colors and laminated adjacently, and the forming method thereof is not particularly restricted. The different-colored laminated base material may be formed, for example, by a forming method including laminating a plurality of film layers having different colors adjacently by a multi-layer co-extrusion (multi-layer co-extrusion forming method), or by a forming method including laminating a plurality of film layers having different colors adjacently by an adhesion through an adhesive layer or a pressure-sensitive adhesive layer (adhesion laminating method). Therefore, examples of the different-colored laminated base material include a different-colored laminated base material formed by laminating a plurality of film layers having different colors adjacently by a multi-layer co-extrusion, and a different-colored laminated base material formed by laminating a plurality of film layers having different colors adjacently by an adhesion through an adhesive layer or a pressure-sensitive adhesive layer.

In the present invention, the multi-layer co-extrusion forming method is advantageous for forming the different-colored laminated base material, in consideration of the adhesivity between the film layers showing different colors, and the production cost. As a method for producing a different-colored laminated base material by a multi-layer co-extrusion forming method, for example, a method, in which colorant-containing resin compositions for forming respective film layers are respectively prepared, charged in a multi-layer co-extrusion molding apparatus and subjected to a multi-layer co-extrusion to obtain a sheet-shaped base material having a layered structure in which film layers showing different colors are laminated adjacently, thereby forming a different-colored laminated base material, may be mentioned.

As mentioned above, the multi-layer co-extrusion forming method allows to laminate the film layers showing respectively different colors without generating creases even when each film layer is thin and with an excellent adhesivity, thereby forming the different-colored laminated base material. Further, the different-colored laminated base material can be formed with a low cost, as it can be formed by a single extrusion step.

Further, as a method for producing a different-colored laminated base material by the adhesion laminating method, for example, the following method may be mentioned. In the method, colorant-containing resin compositions for forming film layers are respectively prepared, each charged in a film forming apparatus (extrusion molding apparatus, inflation molding apparatus or calender molding apparatus) and subjected to a film molding (extrusion molding, inflation molding or calender molding) to obtain films (sheet-shaped base materials) separately. Then an adhesive or a pressure-sensitive adhesive is coated on a surface of either film and the other film is superposed on the surface coated with the adhesive or the pressure-sensitive adhesive and a drying or a curing is executed according to the necessity to obtain a sheet-shaped base material having a layered structure in which the film layers showing different colors are laminated adjacently, thereby obtaining the different-colored laminated base material.

In the present invention, it is important, in the layered structure of the different-colored laminated base material, that the film layers that are laminated adjacently constitute a combination of film layers showing different colors, and the film layers that are not laminated adjacently may be a combination of film layers showing different colors or a combination of film layers showing a same color. In the different-colored laminated base material, the colors of the respective film layers are not particularly restricted and may be suitably selected, for example, according to the purpose of use of the pressure-sensitive adhesive tape or sheet. For example, in the case of providing the pressure-sensitive adhesive tape or sheet with a light-reflective property, it is important that the different-colored laminated base material includes a film layer capable of effectively exhibiting a light-reflective property, particularly a film layer capable of exhibiting a light-reflective property realizing a reflectance of 60% or higher (also called as a "light-reflective film layer"). Furthermore, in the case of providing the pressure-sensitive adhesive tape or sheet with a light-shielding property, it is important that the different-colored laminated base material includes a film layer capable of effectively exhibiting a light-shielding property, particularly a film layer capable of exhibiting a light-shielding property realizing a transmittance of 0.3% or lower (also called as a "light-shielding film layer").

More specifically, in the case that the different-colored laminated base material is used, for example, as a base material in a pressure-sensitive adhesive tape or sheet having a light-reflective property, at least a film layer on the surface side is preferably a film layer showing white color (also called "white-colored film layer") or a film layer showing silver color (also called "silver-colored film layer"). In the case that it is used as a base material in a pressure-sensitive adhesive tape or sheet having a light-shielding property, at least any one of the film layers is preferably a film layer showing black color (also called "black-colored film layer"). Furthermore, in the case that it is used as a base material in a pressure-sensitive adhesive tape or sheet having a light-reflective property and a light-shielding property, at least a film layer on the surface side is preferably a white-colored film layer or a silver-colored film layer and at least any one of the film layers is preferably a black-colored film layer.

Therefore, specific examples of the different-colored laminated base material include a different-colored laminated base material having a layered structure of a black-colored film layer and a white-colored film layer; a different-colored laminated base material having a layered structure of a black-colored film layer and a silver-colored film layer; a different-colored laminated base material having a layered structure of a white-colored film layer and a silver-colored film layer; a different-colored laminated base material having a layered structure of a black-colored film layer, a silver-colored film layer and a white-colored film layer layered in this order; a different-colored laminated base material having a layered structure of a white-colored film layer, a black-colored film layer and another white-colored film layer layered in this order; a different-colored laminated base material having a layered structure of a white-colored film layer, a black-colored film layer and silver-colored film layer layered in this order; a different-colored laminated base material having a layered structure of a silver-colored film layer, a black-colored film layer and another silver-colored film layer layered in this order; a different-colored laminated base material having a layered structure of a white-colored film layer, a silver-colored film layer, a black-colored film layer and another white-colored film layer layered in this order; a different-colored laminated base material having a layered structure of a white-colored film layer, a silver-colored film layer, a black-colored film layer and another silver-colored film layer layered in this order; and a different-colored laminated base material having a layered structure of a white-colored film layer, a silver-colored film layer, a black-colored film layer, another silver-colored film layer and another white-colored film layer layered in this order.

In the present invention, the different-colored laminated base material is preferably a different-colored laminated base material having a layered structure of a black-colored film layer and a white- or silver-colored film layer; a different-colored laminated base material having a layered structure of a white-colored film layer and a silver-colored film layer; a different-colored laminated base material having a layered structure of a black-colored film layer, a silver-colored film layer and a white-colored film layer layered in this order; or a different-colored laminated base material having a layered structure of a white- or silver-colored film layer, a black-colored film layer, and another white- or silver-colored film layer layered in this order.

In the case that the different-colored laminated base material is formed by the adhesion laminating method, an adhesive layer or a pressure-sensitive adhesive layer is formed between the respective film layers in the different-colored laminated base materials of the layered structures cited as examples above. Such adhesive layer or pressure-sensitive adhesive layer may show a color similar to that of either one of the film layers adhered thereto or may show a color different from those of the film layers adhered thereto, but is preferably colorless and transparent.

### Plastic material

In the different-colored laminated base material, a plastic material (resinous material) constituting each film layer is not particularly restricted, and may be suitably selected among the publicly known plastic materials capable of forming a film. The plastic material for forming the film layer may be same or different among the respective film layers.

Examples of the plastic material for forming each film layer include a polyester (such as polyethylene terephthalate, polyethylene naphthalate, polybutylene terephthalate, or polybutylene naphthalate), a polyolefin (such as polyethylene, polypropylene, or an ethylene-propylene copolymer), polyvinyl alcohol, polyvinyl acetate, a polyamide, a polyimide, a cellulose, a fluorinated resin, a polyether, a polystyrene resin (such as polystyrene), polycarbonate and polyethersulfon. These materials may be employed singly or in a combination of two or more kinds.

The plastic material is preferably a polyester, and particularly preferably polyethylene terephthalate.

Therefore, each film layer is preferably a polyester film layer containing a colorant for showing a predetermined color, and more preferably a polyethylene terephthalate film layer containing a colorant for showing a predetermined color.

Each film layer may have either of a single layer structure and a multi-layered structure, but preferably has a single layer structure.

### Colorant

In the different-colored laminated base material, the film layers laminated in adjacent manner show different colors. The color of each film layer is not particularly restricted, and may be suitably selected, for example, according to the purpose of use of the pressure-sensitive adhesive tape or sheet, in which the different-colored laminated base material is used. Examples of the color include black color, white color, red color, blue color, yellow color, green color, yellow-green color, orange color, purple color, gray color and gold color. In the case that the pressure-sensitive adhesive tape or sheet is utilized in an application requiring a light-reflective property, the film layer on at least a surface of the different-colored laminated base material preferably has white color or silver color. In the case that the pressure-sensitive adhesive tape or sheet is utilized in an application requiring a light-shielding property, any one of the film layers in the different-colored laminated base material preferably has black color.

Each film layer, showing a predetermined color, is required to contain a colorant corresponding to the color shown. The colorant may be a whitish colorant when the film layer shows white color, a silver-like colorant when the film layer shows silver color, or a blackish colorant when the film layer shows black color. Such colorant may any colorant (coloring material) such as a pigment or a dye, but a pigment can be employed advantageously.

Specific examples of the white-colored colorant include inorganic white colorants such as titanium oxide (titanium dioxide such as rutile type titanium dioxide or anatase type titanium dioxide), zinc oxide, aluminum oxide, silicon oxide, zirconium oxide, magnesium oxide, calcium oxide, tin oxide, barium oxide, cesium oxide, yttrium oxide, magnesium carbonate, calcium carbonate (such as light calcium carbonate or heavy calcium carbonate), barium carbonate, zinc carbonate, aluminum hydroxide, calcium hydroxide, magnesium hydroxide, zinc hydroxide, aluminum silicate, magnesium silicate, calcium silicate, barium silicate, calcium sulfate, barium stearate, zinc oxide, zinc sulfide, talc, silica, alumina, clay, caolin, titanium phosphate, mica, gypsum, white carbon, diatomaceous earth, bentonite, lithopone, zeolite, sericite, and hydrated halloysite, and organic white colorants such as acrylic resin particles, polystyrene type resin particles, polyurethane type resin particles, amide type resin particles, polycarbonate type resin particles, silicone type resin particles, urea-formalin type resin particles, and melamine type resin particles. As the white-colored colorant, also employable is a fluorescent whitening agent, which can be suitably selected among those already known. The white-colored colorant may be employed singly or in a combination of two or more kinds.

Further, examples of the silver-colored colorant include silver and aluminum. The silver-colored colorant may be employed singly or in a combination of two or more kinds.

The silver-colored film layer may also be formed by an evaporation method of a metal component, capable of exhibiting a silver-like color, such as silver or aluminum. As the evaporation method, employable is a reduced-pressure evaporation (vacuum evaporation) process, a physical sputtering process or a chemical sputtering process.

Examples of the black-colored colorant include carbon black (such as furnace black, channel black, acetylene black, thermal black or lamp black), graphite, copper oxide, manganese dioxide, aniline black, perylene black, titanium black, cyanine black, active charcoal, ferrite (such as non-magnetic ferrite or magnetic ferrite), magnetite, chromium oxide, iron oxide, molybdenum dioxide, a chromium complex, a composite oxide type black dye, and an anthraquinone type organic black dye. The black-colored colorant may be employed singly or in a combination of two or more kinds.

As the black-colored colorant, employable also is a colorant mixture in which a cyan-colored colorant (blue-green colorant), a magenta-colored colorant (red-purple colorant) and a yellow-colorant colorant (yellow colorant) are mixed. Further, a film layer showing black color may be a multi-layered film layer, constituted of a film layer formed by a cyan ink composition principally containing a cyan-colored colorant, a film layer formed by a magenta ink composition principally containing a magenta-colored colorant, and a film layer formed by a yellow ink composition principally containing a yellow-colored colorant.

In the case that the black-colored colorant is a colorant mixture formed by mixing a cyan-colored colorant, a magenta-colored colorant and a yellow-colored colorant, each of the cyan-colored colorant, the magenta-colored colorant and the yellow-colored colorant may be used singly or in a combination of two or more kinds. The mixing ratio (or blending ratio) of the cyan-colored colorant, the magenta-colored colorant and the yellow-colored colorant in the colorant mixture is not particularly restricted so long as a black-like color can be exhibited, and may be suitably selected, for example, according to the type of each colorant. The contents of the cyan-colored colorant, the magenta-colored colorant and the yellow-colored colorant in the colorant mixture can be suitably selected, for example, within a range, with respect to the total amount of the colorants, of cyan-colored colorant/magenta-colored colorant/yellow-colored colorant = 10 - 50wt%/10 - 50wt%/10 - 50wt% (preferably 20 - 40wt%/20 - 40wt%/20 - 40wt%).

Each of the cyan-colored colorant, the magenta-colored colorant and the yellow-colored colorant may be suitably selected among those already known.

Thus, each film layer may be formed by a colorant-containing plastic composition (colorant-containing resin composition) which contains a colorant corresponding to the exhibited color. The colorant-containing resin composition may contain, according to the necessity, conventional additives such as a filler, a flame retardant, an antiaging agent, an antistatic, a softener, an ultraviolet absorber, an antioxidant, a plasticizer, or a surfactant.

The total thickness of the different-colored laminated base material is not particularly restricted, and may be suitably selected, for example, according to the purpose of use of the pressure-sensitive adhesive tape or sheet. More specifically, in the case that the different-colored laminated base material is used as the base material for a light-reflective/shielding pressure-sensitive adhesive tape or sheet, the total thickness of the different-colored laminated base material may be suitably selected within a range of from 10 to 100 µm (preferably from 10 to 50 µm, and more preferably from 10 to 40 µm).

Further, in the different-colored laminated base material, the thickness of each film layer may be suitably selected, for example, according to a total thickness required for the different-colored laminated base material and a layered configuration thereof. However, each film layer in the different-colored laminated base material is required to have a thickness capable of effectively exhibiting characteristics corresponding to the color shown by the film layer. More specifically, for example, when the different-colored laminated base material has a layered structure including a black-colored film layer and a white-colored film layer, the thickness of the black-colored film layer may be suitably selected within a range of from 1 to 50 µm (preferably from 1 to 30 µm, and more preferably from 1 to 10 µm), while the thickness of the white-colored film layer may be suitably selected within a range of from 10 to 100 µm (preferably from 10 to 50 µm, and more preferably from 10 to 40 µm).

### Light-reflective/shielding pressure-sensitive adhesive tape or sheet

The light-reflective/shielding pressure-sensitive adhesive tape or sheet (pressure-sensitive adhesive tape or sheet having light-reflective property and/or light-shielding property) of the present invention includes a base material and at least one pressure-sensitive adhesive layer disposed on at least one surface of the base material, and has a reflectance of 60% or higher on at least one surface thereof and/or a transmittance of 0.3% or lower, in which, as the base material, the base material for a pressure-sensitive adhesive tape or sheet constituted of the different-colored laminated base material is employed.

As the light-reflective/shielding pressure-sensitive adhesive tape or sheet employs the different-colored laminated base material as the base material, it is not necessary to form an ink layer such as a white-colored ink layer or a black-colored ink layer. Therefore, in the light-reflective/shielding pressure-sensitive adhesive tape or sheet, the content of a chlorine component is significantly reduced or completely eliminated, a decrease in the pressure-sensitive adhesivity induced by a bleeding out of a low-molecular weight component contained in the ink layer is prevented, and a decrease in the light-reflective property and in the light-shielding property by pinholes in the ink layer is prevented.

Besides, the light-reflective/shielding pressure-sensitive adhesive tape or sheet, having the different-colored laminated base material as described above, has an excellent tear resistance, and can be peeled off without tearing at the positioning even in a case of a width of 3 mm or less (for example, about 2 mm). Therefore, even when a misposition at the adhesion to the liquid crystal display module unit or to the backlight unit happens, the light-reflective/shielding pressure-sensitive adhesive tape or sheet can be peeled off and positioned again.

Furthermore, in the light-reflective/shielding pressure-sensitive adhesive tape or sheet, even in the case that the film layer at the surface side of the different-colored laminated base material is a film layer containing carbon black and showing black color, a low electrical conductive property or a non-conductive property can be exhibited effectively, since the carbon black is dispersed in the plastic material. When the carbon black is contained in such an amount as to exhibit an electrical conductive property, the film layer usually becomes extremely difficult to form.

In the present invention, in the case that the light-reflective/shielding pressure-sensitive adhesive tape or sheet has a property having a reflectance of 60% or higher on at least one surface thereof, the reflectance of the surface having a reflectance of 60% or higher is not particularly restricted so long as it is 60% or higher (for example, from 60 to 100%), but the higher the more preferable. In the light-reflective/shielding pressure-sensitive adhesive tape or sheet, the reflectance of the surface having a reflectance of 60% or higher is preferably 70% or higher and more preferably 80% or higher. In the case that the light-reflective/shielding pressure-sensitive adhesive tape or sheet has a property having reflectances of 60% or higher on both surfaces, the reflectances of the surfaces may be same or different each other.

In the light-reflective/shielding pressure-sensitive adhesive tape or sheet, the reflectance (diffuse reflectance) (%) of a predetermined surface can be determined, utilizing a spectrophotometer MPS-2000 manufactured by Shimadzu Corp., by irradiating a surface (predetermined surface side) of the light-reflective/shielding pressure-sensitive adhesive tape or sheet with a light of a wavelength of 550 nm and measuring an intensity of a light reflected from the irradiated surface.

Further, in the case that the light-reflective/shielding pressure-sensitive adhesive tape or sheet has a property having a transmittance of 0.3% or lower, the transmittance of the light-reflective/shielding pressure-sensitive adhesive tape or sheet is not particularly restricted so long as it is 0.3% or lower (from 0 to 0.3%), but the lower the more preferable. In the light-reflective/shielding pressure-sensitive adhesive tape or sheet, the transmittance is preferably 0.1% or lower, more preferably 0.05% or lower, further preferably 0.03 % or lower and particularly preferably 0.01% or lower.

The transmittance (%) of the light-reflective/shielding pressure-sensitive adhesive tape or sheet can be determined, with a spectrophotometer U4100 manufactured by Hitachi Ltd., by irradiating a surface of the light-reflective/shielding pressure-sensitive adhesive tape or sheet with a light of a wavelength of 550 nm, and measuring an intensity of a light transmitted to the other surface.

### Light-reflective film layer

The light-reflective/shielding pressure-sensitive adhesive tape or sheet of the invention, when it has a reflectance of 60% or higher on at least one surface thereof, may utilize a different-colored laminated base material having, on at least one surface thereof, a film layer (reflective film layer) exhibiting a reflectivity capable of realizing a reflectance of 60% or higher. It is important that the reflective film layer has such a reflectivity capable of realizing a reflectance of 60% or higher on a predetermined surface of the light-reflective/shielding pressure-sensitive adhesive tape or sheet. Therefore, the reflectance of the reflective layer is, like the reflectance of the light-reflective/shielding pressure-sensitive adhesive tape or sheet, importantly 60% or higher (from 60 to 100%), preferably 70% or higher, further preferably 80 % or higher and particularly 85% or higher.

In the case that the reflective film layer has a multi-layered structure, it is important to regulate not the reflectance of each reflective film layer, but the reflectance of the entire reflective film layers of the multi-layered structure, in such a manner that the light-reflective/shielding pressure-sensitive adhesive tape or sheet has a reflectance of 60% or higher.

In the present invention, the different-colored laminated base material having a reflective film layer on at least one surface side thereof is to be used, in order to reflect a light irradiating at least one surface of the light-reflective/shielding pressure-sensitive adhesive tape or sheet, in such a form as to realize a reflectance of 60% or higher on at least one surface of the light-reflective/shielding pressure-sensitive adhesive tape or sheet, and the reflective film layer may be provided in such a form as to be exposed on one surface of the light-reflective/shielding pressure-sensitive adhesive tape or sheet, or in such a form positioned inside a layer having transparency (such as a transparent pressure-sensitive adhesive layer or a transparent base material). Further, the different-colored laminated base material having a reflective film layer on at least one surface side thereof may be used in such a form that, on the reflective film layer, a pressure-sensitive adhesive layer capable of exhibiting a light-reflective property as in the reflective film layer is formed.

Examples of the reflective layer include a white-colored layer and a silver-colored layer, but a white-colored layer can be employed advantageously. In the white-colored film layer, white color basically means a whitish color having L*, defined in L*a*b* color space, of 87 or larger (from 87 to 100), preferably 90 or larger (from 90 to 100) and more preferably 92 or larger (from 92 to 100). In this regard, a* and b*, defined in the L*a*b* color space, each can be suitably selected according to the value of L*. For example, each of a* and b* is preferably within a range of from -10 to 10 (particularly from -5 to 5), and more preferably 0 or about 0 (within a range of from -2 to 2).

Silver color basically means a silver-like color having L*, defined in L*a*b* color space, of from 70 to 90, (preferably from 72 to 88 and more preferably from 75 to 85). In this regard, a* and b*, defined in the L*a*b* color space, each can be suitably selected according to the value of L*. For example each of a* and b* is preferably within a range of from -10 to 10 (particularly from -5 to 5), and more preferably 0 or about 0 (within a range of from -2 to 2) .

In the invention, L*, a* and b* defined in the L*a*b* color space can be determined by a measurement with a color difference meter CR-200 (trade name), manufactured by Minolta Ltd. The L*a*b* color space is a color space recommended by the Commission Internationale de l'Eclairage (CIE) in 1976, and means a color space called CIE1976 (L*a*b*) color space. Also, the L*a*b* color space is defined in Japanese Industrial Standards by JIS Z8729.

### Light-shielding layer

The light-reflective/shielding pressure-sensitive adhesive tape or sheet of the invention, when having a transmittance of 0.3% or lower, may utilize a different-colored laminated base material having a film layer (light-shielding film layer) exhibiting a transmission capable of realizing a transmittance of 0.3% or lower. It is important that the light-shielding film layer has such a transmission capable of realizing a transmittance of 0.3% or lower in the light-reflective/shielding pressure-sensitive adhesive tape or sheet. Therefore, the transmittance of the light-shielding layer is, like the transmittance of the light-reflective/shielding pressure-sensitive adhesive tape or sheet, importantly 0.3% or lower (from 0 to 0.3%), preferably 0.1% or lower (more preferably 0.05% or lower) and further 0.03% or lower (particularly 0.01% or lower).

In the case that the light-shielding film layer has a multi-layered structure, it is important to regulate not the transmittance of each light-shielding film layer, but the transmittance of the entire light-shielding film layers of the multi-layered structure, in such a manner that the light-reflective/shielding pressure-sensitive adhesive tape or sheet has a transmittance of 0.3% or lower.

In the invention, as the transmittance of the light-shielding film layer corresponds to (or coincides with) the transmittance of the light-reflective/shielding pressure-sensitive adhesive tape or sheet, the transmittance of the light-shielding film layer can be determined by measuring the transmittance of the light-reflective/shielding pressure-sensitive adhesive tape or sheet, without extracting the light-shielding film layer from the light-reflective/shielding pressure-sensitive adhesive tape or sheet.

In the invention, the light-shielding film layer is preferably a black-colored film layer. In the black-colored film layer, black color basically means a blackish color having L*, defined in L*a*b* color space, of 35 or less (from 0 to 35), preferably 30 or less (from 0 to 30) and more preferably 25 or less (from 0 to 25). In this regard, a* and b*, defined in the L*a*b* color space, each can be suitably selected according to the value of L*. For example each of a* and b* is preferably within a range of from -10 to 10 (particularly from -5 to 5), and more preferably 0 or about 0 (within a range of from -2 to 2).

### Pressure-sensitive adhesive layer

The light-reflective/shielding pressure-sensitive adhesive tape or sheet of the invention has a pressure-sensitive adhesive layer on at least one surface of the different-colored laminated base material. The pressure-sensitive adhesive for forming the pressure-sensitive adhesive layer is not particularly restricted, and examples thereof include already known pressure-sensitive adhesives such as an acrylic pressure-sensitive adhesive, a rubber type pressure-sensitive adhesive, an urethane type pressure-sensitive adhesive, a silicone type pressure-sensitive adhesive, a polyester type pressure-sensitive adhesive, a polyamide type pressure-sensitive adhesive, an epoxy type pressure-sensitive adhesive, a vinyl alkyl ether type pressure-sensitive adhesive, and a fluorinated pressure-sensitive adhesive. Such pressure-sensitive adhesive composition may be used singly or in combination of two or more kinds. Also the pressure-sensitive adhesive composition may be a pressure-sensitive adhesive of any form, such as an emulsion type pressure-sensitive adhesive, a solvent type pressure-sensitive adhesive or a thermally fusible (hot-melt type) pressure-sensitive adhesive.

As the pressure-sensitive adhesive, an acrylic pressure-sensitive adhesive or a rubber type pressure-sensitive adhesive can be employed advantageously. The acrylic pressure-sensitive adhesive contains an acrylic polymer as a principal component or a base polymer. The acrylic polymer is not particularly restricted, but preferably employs a (meth)acrylic acid alkyl ester (acrylic acid alkyl ester or methacrylic acid alkyl ester) as a principally constituting monomer component (principal monomer component). Specific examples of the (meth)acrylic acid alkyl ester include methyl (meth)acrylate, ethyl (meth)acrylate, propyl (meth)acrylate, isopropyl (meth) acrylate, butyl (meth) acrylate, isobutyl (meth)acrylate, s-butyl (meth)acrylate, t-butyl (meth) acrylate, pentyl (meth) acrylate, isoamyl (meth)acrylate, neopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, and dodecyl (meth)acrylate. The (meth)acrylic acid alkyl ester may be employed singly or in a combination of two or more kinds.

As to the monomer components constituting the acrylic polymer, so long as a (meth)acrylic acid alkyl ester is employed as the principal monomer component, another monomer component capable of copolymerizing with (meth)acrylic acid alkyl ester (also called "copolymerizable monomer component") may also be used. The (meth)acrylic acid alkyl ester is preferably employed in a proportion of 50wt% or higher, with respect to all the monomer components constituting the acrylic polymer. When the amount of the (meth)acrylic acid alkyl ester is less than 50wt% with respect to all the monomer components constituting the acrylic polymer, it may be difficult to exhibit the characteristics (such as pressure-sensitive adhesive property) of the acrylic polymer.

The copolymerizable monomer component may be used for introducing a crosslinking site into the acrylic polymer or for improving the cohesive power of the acrylic polymer. The copolymerizable monomer component may be employed singly or in a combination of two or more kinds.

More specifically, as the copolymerizable monomer component, for the purpose of introducing a crosslinking site into the acrylic polymer, a functional group-containing monomer component (particularly a thermally crosslinking functional group-containing monomer component for introducing a thermal crosslinking site into the acrylic polymer) can be employed. Such functional group-containing monomer component may be, without particular restriction, any monomer component that can copolymerize with (meth)acrylic acid alkyl ester and that has a functional group providing a crosslinking site, and examples thereof include carboxyl group-containing monomers such as (meth)acrylic acid, itaconic acid, crotonic acid, maleic acid, fumaric acid, and isocrotonic acid, and anhydride thereof (such as maleic anhydride and itaconic anhydride); hydroxyl group-containing monomers such as hydroxyalkyl (meth)acrylates such as 2-hydroxyethyl (meth)acrylate, and 2-hydroxypropyl (meth)acrylate and 2-hydroxybuthyl (meth)acrylate, vinyl alcohol and allyl alcohol; amide type monomers such as (meth)acrylamide, N,N-dimethyl(meth)acrylamide, N-butyl(meth)acrylamide, N-methylol (meth)acrylamide, N-methylolpropane (meth)acrylamide, N-methoxymethyl (meth)acrylamide, and N-butoxymethyl (meth)acrylamide; amino group-containing monomers such as aminoethyl (meth)acrylate, N,N-dimethylaminoethyl (meth)acrylate, and t-butylaminoethyl (meth)acrylate; epoxy group-containing monomers such as glycidyl (meth)acrylate, and methylglycidyl (meth)acrylate; cyano group-containing monomers such as acrylonitrile and methacrylonitrile; and monomers having a nitrogen-containing ring, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, and N-(meth)acryloylmorpholine. As the functional group-containing monomer, a carboxyl group-containing monomer such as acrylic acid or an acid anhydride thereof can be employed advantageously.

Also as the copolymerizable monomer component, another copolymerizable monomer component may be employed for the purpose of increasing the cohesive power of the acrylic polymer. Examples of such another copolymerizable monomer component include vinyl ester type monomers such as vinyl acetate and vinyl propionate; styrene type monomers such as styrene, a substituted styrene (such as α-methylstyrene), and vinyltoluene; non-aromatic ring-containing (meth)acrylic acid esters such as a (meth)acrylic acid cycloalkyl ester (such as cyclohexyl (meth)acrylate or cyclopentyl di(meth)acrylate), bornyl (meth)acrylate, and isobornyl (meth)acrylate; aromatic ring-containing (meth)acrylic acid esters such as a (meth)acrylic acid aryl ester (such as phenyl (meth)acrylate), a (meth)acrylic acid aryloxyalkyl ester (such as phenoxyethyl (meth)acrylate), and a (meth)acrylic acid arylalkyl ester (such as benzyl (meth)acrylate); olefinic monomers such as ethylene, propylene, isoprene, butadiene and isobutylene; vinyl chloride, vinylidene chloride; isocyanate group-containing monomers such as 2-(meth)acryloyloxyethyl isocyanate; alkoxy group-containing monomers such as methoxyethyl (meth)acrylate and ethoxyethyl (meth)acrylate; vinyl ether type monomers such as methyl vinyl ether, and ethyl vinyl ether; and polyfunctional monomers such as 1,6-hexanediol di(meth)acrylate, ethylene glycol di(meth)acrylate, diethylene glycol di(meth)acrylate, triethylene glycol di(meth)acrylate, tetraethylene glycol di(meth)acrylate, (poly)ethylene glycol di(meth)acrylate, propylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa (meth) acrylate, glycerin di(meth)acrylate, epoxy acrylate, polyester acrylate, urethane acrylate, divinylbenzene, butyl di(meth)acrylate, and hexyl di(meth)acrylate.

Examples of the rubber type pressure-sensitive adhesive include those containing, as a base polymer, a rubber component such as natural rubber, a styreneisoprene-styrene block copolymer (SIS block copolymer), a styrene-butadiene-styrene block copolymer (SBS block copolymeer), a styrene-ethylene/butylene-styrene block copolymer (SEBS block copolymer), styrene-butadiene rubber, polybutadiene, polyisoprene, polyisobutylene, butyl rubber, chloroprene rubber, silicone rubber, acrylonitrile-butadiene rubber, or ethylene-propylene terpolymer.

The pressure-sensitive adhesive may contain, according to the necessity, various known additives such as a crosslinking agent, a cross bonding agent, a pressure-sensitive adhesive property providing resin, a filler, a flame retardant, an antiaging agent, an antistatic, a softener, an ultraviolet absorber, an antioxidant, a plasticizer, or a surfactant.

The pressure-sensitive adhesive layer may have a single-layered or multi-layered structure.

The pressure-sensitive adhesive layer is preferably a pressure-sensitive adhesive having transparency (also called "transparent pressure-sensitive adhesive layer"), but may also be a pressure-sensitive adhesive layer showing white color, silver color, black color or the like. A pressure-sensitive adhesive layer showing white color or silver color may be utilized as a pressure-sensitive adhesive layer exhibiting a light-reflective property, and a pressure-sensitive adhesive layer showing black color may be utilized as a pressure-sensitive adhesive layer exhibiting a light-shielding property. Therefore, the pressure-sensitive adhesive layer may contain a colorant matching the color shown (such as whitish colorant, silver-like colorant or blackish colorant).

The thickness of the pressure-sensitive adhesive layer is not particularly restricted, and may be suitably selected for example within a range of from 2 to 100 µm (preferably from 5 to 80 µm).

The pressure-sensitive adhesive layer is not restricted in the forming method therefor, and may be formed, for example, by a method of coating a pressure-sensitive adhesive on a predetermined surface, followed by an optional drying or curing, or a method of coating a pressure-sensitive adhesive on a separator (releasable liner), followed by an optional drying or curing to obtain a pressure-sensitive adhesive layer, and transferring such pressure-sensitive adhesive layer by adhering onto a predetermined surface. For coating the pressure-sensitive adhesive composition, a common coating equipment (such as a gravure roll coater, a reverse roll coater, a kiss roll coater, a dip roll coater, a bar coater, a knife coater or a spray coater) can be used.

The light-reflective/shielding pressure-sensitive adhesive tape or sheet of the invention, including the different-colored laminated base material as described above, has a form of a base-containing pressure-sensitive adhesive tape or sheet. The light-reflective/shielding pressure-sensitive adhesive tape or sheet includes a different-colored laminated base material and a pressure-sensitive adhesive layer(s) formed on at least one surface (one surface or both surfaces) of the base material, and has characteristics that at least one surface has a reflectance of 60% or higher and/or a transmittance of 0.3% or lower. More specifically, the light-reflective/shielding pressure-sensitive adhesive tape or sheet may, for example, have one of following layer structures (1) to (14):
layer structure (1): structure of transparent pressure-sensitive adhesive layer/[black-colored film layer/white-colored film layer] (different-colored laminated base material)/transparent pressure-sensitive adhesive layer
layer structure (2): structure of transparent pressure-sensitive adhesive layer/[black-colored film layer/silver-colored film layer] (different-colored laminated base material)/transparent pressure-sensitive adhesive layer
layer structure (3): structure of transparent pressure-sensitive adhesive layer/[white-colored film layer/silver-colored film layer] (different-colored laminated base material)/transparent pressure-sensitive adhesive layer
layer structure (4): structure of transparent pressure-sensitive adhesive layer/[black-colored film layer/silver-colored film layer/white-colored film layer] (different-colored laminated base material)/transparent pressure-sensitive adhesive layer
layer structure (5): structure of transparent pressure-sensitive adhesive layer/[white-colored film layer/black-colored film layer/white-colored film layer] (different-colored laminated base material)/transparent pressure-sensitive adhesive layer
layer structure (6): structure of transparent pressure-sensitive adhesive layer/[white-colored film layer/black-colored film layer/silver-colored film layer] (different-colored laminated base material)/transparent pressure-sensitive adhesive layer
layer structure (7): structure of transparent pressure-sensitive adhesive layer/[silver-colored film layer/black-colored film layer/silver-colored film layer] (different-colored laminated base material)/transparent pressure-sensitive adhesive layer
layer structure (8): structure of transparent pressure-sensitive adhesive layer/[white-colored film layer/silver-colored film layer/black-colored film layer/white-colored film layer] (different-colored laminated base material)/transparent pressure-sensitive adhesive layer
layer structure (9): structure of transparent pressure-sensitive adhesive layer/[white-colored film layer/silver-colored film layer/black-colored film layer/silver-colored film layer] (different-colored laminated base material)/transparent pressure-sensitive adhesive layer
layer structure (10): structure of transparent pressure-sensitive adhesive layer/[white-colored film layer/silver-colored film layer/black-colored film layer/silver-colored film layer/white-colored film layer] (different-colored laminated base material)/transparent pressure-sensitive adhesive layer
layer structure (11): structure in which, in the layer structures (1) to (10), either one of the transparent pressure-sensitive adhesive layers on both sides is not formed
layer structure (12): structure in which, in the layer structures (1) to (11), at least either one transparent pressure-sensitive adhesive layer formed on the white-colored film layer or the silver-colored film layer shows white color or silver color
layer structure (13): structure in which, in the layer structures (1) to (12), a transparent pressure-sensitive adhesive layer formed on the black-colored film layer shows black color
layer structure (14): structure in which, in the layer structures (1) to (13), the film layers in the different-colored laminated base material are laminated across an adhesive layer or a pressure-sensitive adhesive layer.

In this manner, the light-reflective/shielding pressure-sensitive adhesive tape or sheet may have a structure including the pressure-sensitive adhesive layer on only one surface of the base material, or a structure including the pressure-sensitive adhesive layers on both surfaces of the base material. Further, the light-reflective/shielding pressure-sensitive adhesive tape or sheet may have a laminated form of sheets, or a form wound in a roll.

In the light-reflective/shielding pressure-sensitive adhesive tape or sheet, the surface of the pressure-sensitive adhesive layer (such as transparent pressure-sensitive adhesive layer) may be protected by a conventional separator (releasable liner). Further, in the case that the light-reflective/shielding pressure-sensitive adhesive tape or sheet has a structure having the pressure-sensitive adhesive layer only on one surface of the different-colored laminated base material, the surface of the pressure-sensitive adhesive layer may be protected, for example, by forming a releasably treated layer by means of a conventional releasing treatment agent (such as silicone type releasing treatment agent) on a surface (rear surface) of the different-colored laminated base material not bearing the pressure-sensitive adhesive layer and winding the tape or sheet in such a form that the releasably treated layer and the pressure-sensitive adhesive layer are contacted with each other.

When the light-reflective/shielding pressure-sensitive adhesive tape or sheet of the invention has a reflectance of 60% or higher on one surface thereof, it can be advantageously utilized as a pressure-sensitive adhesive tape or sheet having a reflective property (reflective pressure-sensitive adhesive tape or sheet). Further, when the light-reflective/shielding pressure-sensitive adhesive tape or sheet of the invention has a transmittance of 0.3% or lower, it can be advantageously utilized as a pressure-sensitive adhesive tape or sheet having a light-shielding property (light-shielding pressure-sensitive adhesive tape or sheet). Moreover, when the light-reflective/shielding pressure-sensitive adhesive tape or sheet of the invention has a reflectance of 60% or higher on one surface thereof and has a transmittance of 0.3% or lower, it can be advantageously utilized as a pressure-sensitive adhesive tape or sheet having a reflective property and a light-shielding property (reflective/light-shielding pressure-sensitive adhesive tape or sheet). Such light-reflective/shielding pressure-sensitive adhesive tape or sheet may be a pressure-sensitive adhesive tape or sheet having pressure-sensitive adhesive surfaces on both surfaces (double-faced pressure-sensitive adhesive tape or sheet), or may be a pressure-sensitive adhesive tape or sheet having a pressure-sensitive adhesive surface on only one surface.

Therefore, the light-reflective/shielding pressure-sensitive adhesive tape or sheet of the invention is useful as a light-reflective/shielding pressure-sensitive adhesive tape or sheet (light-reflective pressure-sensitive adhesive tape or sheet, light-shielding pressure-sensitive adhesive tape or sheet, or light-reflective/shielding pressure-sensitive adhesive tape or sheet) which is for use in fixing a liquid crystal display module unit and a backlight unit in a liquid crystal display apparatus (LCD) (particularly a compact liquid crystal display apparatus) employed, for example, in so-called "mobile phones" or in so-called "PDA".

Further, the liquid crystal display apparatus of the invention includes a liquid crystal display module unit and a backlight unit and has such a structure that the liquid crystal display module unit and the backlight unit are fixed by the aforementioned light-reflective/shielding pressure-sensitive adhesive tape or sheet (namely a light-reflective/shielding pressure-sensitive adhesive tape or sheet, including a pressure-sensitive adhesive layer on at least one surface of the different-colored laminated base material and characteristics that at least one surface thereof has a reflectance of 60% or higher and/or a transmittance of 0.3% or lower). In the case that the light-reflective/shielding pressure-sensitive adhesive tape or sheet has a reflectance less than 60% on one surface and a reflectance of 60% or higher on the other surface, the surface having the reflectance less than 60% may be positioned on the side of the liquid crystal display module unit and the surface having the reflectance of 60% or higher may be positioned on the side of the backlight unit, or, the surface having the reflectance less than 60% may be positioned on the side of the backlight unit and the surface having the reflectance of 60% or higher may be positioned on the side of the liquid crystal display module unit.

### EXAMPLES

In the following, the present invention will be further clarified by examples, but the present invention is not limited by these examples.

### Example 1

A multi-layered co-extrusion film (manufactured by Mitsubishi Polyester Film GmbH) of a form constituted of a polyethylene terephthalate film layer (thickness: 15 µm) showing black color by containing carbon black and a polyethylene terephthalate film layer (thickness: 15 µm) showing white color by containing titanium oxide was employed as a base material, and, on both surfaces of the base material, a transparent acrylic pressure-sensitive adhesive was coated so as to obtain a thickness of 20 µm after drying or curing and was dried or cured to obtain a double-faced pressure-sensitive adhesive tape or sheet.

### Example 2

A multi-layered co-extrusion film (manufactured by Mitsubishi Polyester Film GmbH) of a form constituted of a polyethylene terephthalate film layer (thickness: 10 µm) showing black color by containing carbon black and a polyethylene terephthalate film layer (thickness: 20 µm) showing white color by containing titanium oxide was employed as a base material, and, on both surfaces of the base material, a transparent acrylic pressure-sensitive adhesive was coated so as to obtain a thickness of 20 µm after drying or curing and was dried or cured to obtain a double-faced pressure-sensitive adhesive tape or sheet.

### Example 3

A multi-layered co-extrusion film (manufactured by Mitsubishi Polyester Film GmbH) of a form constituted of a polyethylene terephthalate film layer (thickness: 5 µm) showing black color by containing carbon black and a polyethylene terephthalate film layer (thickness: 25 µm) showing white color by containing titanium oxide was employed as a base material, and, on both surfaces of the base material, a transparent acrylic pressure-sensitive adhesive was coated so as to obtain a thickness of 20 µm after drying or curing and was dried or cured to obtain a double-faced pressure-sensitive adhesive tape or sheet.

### Comparative Example 1

As a base material, employed was a printed film (trade name: TU3#13 solid print 5P, manufactured by Daisan Shigyo Co.) of a form bearing a black printed layer on a white-colored polyethylene terephthalate film. On both surfaces of the base material, a transparent acrylic pressure-sensitive adhesive was coated so as to obtain a thickness of 20 µm after drying or curing and was dried or cured to obtain a double-faced pressure-sensitive adhesive tape or sheet.

### Evaluation

On each of the double-faced pressure-sensitive adhesive tapes or sheets of Examples 1 to 3 and Comparative Example 1, and the base materials prior to the preparation of the double-faced pressure-sensitive adhesive tapes or sheets, L*, a* and b* defined in L*a*b* color space, surface resistivity (Ω/sq), transmittance (%), chlorine content (µg/g), light-leak resistance and tear resistance were determined by following measurement or evaluation methods. Results of measurements or evaluations are shown in Table 1.

### Measuring method for L*, a* and b*

L*, a* and b* defined in the L*a*b* color space were measured, with a color difference meter CR-200 (trade name), manufactured by Minolta Ltd., on the base material prior to the preparation of the double-faced pressure-sensitive adhesive tape or sheet.

### Measuring method for surface resistivity

On the base material prior to the preparation of the double-faced pressure-sensitive adhesive tape or sheet, a surface resistivity (Ω/sq) was measured with a high resistance meter (trade name: Hi-Restor UP", manufactured by Mitsubishi Chemical Co.) by contacting electrode ends with the black-colored layer of the base material (black-colored polyethylene terephthalate film layer in Examples 1 to 3, or black printed layer in Comparative Example 1) under conditions of a room temperature (20 to 25°C), a voltage of 100 V and an electrode distance of 100 mm, and reading a measured value (resistance) after standing for 60 seconds.

### Measuring method for transmittance

A transmittance (%) was determined, with a spectrophotometer U4100 manufactured by Hitachi Ltd., by irradiating a surface of the double-faced pressure-sensitive adhesive tape or sheet with a light of a wavelength of 550 nm, and measuring an intensity of the light transmitted to the other surface.

### Measuring method for chlorine content

On the base material prior to the preparation of the double-faced pressure-sensitive adhesive tape or sheet, a chlorine content (µg/g) was quantitatively determined by a combustion gas sampling method by Ion Chromatograph DX-320, manufactured by Dionex Inc.

### Evaluating method for light-leak resistance

The double-faced pressure-sensitive adhesive tape or sheet was irradiated, on the white-colored surface side of the base material (surface side of the white-colored polyethylene terephthalate film layer), with the light of a 20-W fluorescent lamp, and a light leak by pinholes was visually observed from the side of the black-colored layer of the base material (black-colored polyethylene terephthalate film layer in Examples 1 to 3, or black printed layer in Comparative Example 1). The light-leak resistance was evaluated by following criteria:

### Evaluation criteria for light-leak resistance

- ++:: no light leak at all
- +:: slight light leak
- -:: considerable light leak

### Evaluating method for tear resistance

A double-faced pressure-sensitive adhesive tape was punched into a frame shape of a dimension of 39 x 29 mm (external size) and a width of 2 mm, and adhered onto a glass plate. After standing for 24 hours in the adhered state, the double-faced pressure-sensitive adhesive tape or sheet was peeled off from the glass plate under visual observation of the tear state of the double-faced pressure-sensitive adhesive tape or sheet, and the tear resistance was evaluated by following criteria:

### Evaluation criteria for tear resistance

- +:: tear absent
- -:: tear present

**Table 1**

| | Examples | | | Comparative Example 1 |
|---|---|---|---|---|
| | 1 | 2 | 3 | |
| L*a*b* color space | | | | |
| L* | 81.91 | 87.18 | 89.00 | 87.95 |
| a* | -1.27 | -1.04 | -0.92 | -1.26 |
| b* | -6.31 | -5.11 | -4.69 | -3.63 |
| surface resistivity (Ω/sq) | larger than 1.00 x 10¹² | larger than 1.00 x 10¹² | larger than 1.00 x 10¹² | 2.00 x 10⁷ |
| transmittance (%) | 0.01 or less | 0.01 or less | 0.01 or less | 0.01 or less |
| chlorine content (µg/g) | less than 51 | less than 51 | less than 51 | 18,000 |
| light-leak resistance | ++ | ++ | ++ | + |
| tear resistance | + | + | + | - |

While the invention has been described in detail and with reference to specific embodiments thereof, it will be apparent to one skilled in the art that various changes and modifications can be made therein without departing from the scope thereof.

This application is based on Japanese patent application No. 2006-113206 filed April 17, 2006, the entire contents thereof being hereby incorporated by reference.

Further, all references cited herein are incorporated in their entireties.

## Claims

1. A base material for a pressure-sensitive adhesive tape or sheet, comprising a plurality of film layers which have different colors and are laminated adjacently.

2. The base material according to claim 1, which is used in a pressure-sensitive adhesive tape or sheet including a base material and at least one pressure-sensitive adhesive layer disposed on at least one surface of the base material.

3. The base material according to claim 1, which is formed by laminating a plurality of film layers having different colors adjacently by a multi-layer co-extrusion.

4. The base material according to claim 1, which is formed by laminating a plurality of film layers having different colors adjacently by an adhesion through an adhesive layer or a pressure-sensitive adhesive layer.

5. The base material according to claim 1, which has a film layer having a black color and a film layer having a white or silver color.

6. The base material according to claim 1, which has a film layer having a white color and a film layer having a silver color.

7. The base material according to claim 1, which has a film layer having a black color, a film layer having a silver color and a film layer having a white color layered in this order.

8. The base material according to claim 1, which has a film layer having a white or silver color, a film layer having a black color and another film layer having a white or silver color layered in this order.

9. The base material according to claim 1, wherein each of said film layers is formed by a polyethylene terephthalate film layer containing a colorant for showing a predetermined color.

10. A pressure-sensitive adhesive tape or sheet having a light-reflective property and/or a light-shielding property, which comprises:
the base material according to claim 1; and
at least one pressure-sensitive adhesive layer disposed on at least one surface of the base material,
wherein the pressure-sensitive adhesive tape or sheet has a reflectance of 60% or higher on at least one surface thereof and/or a transmittance of 0.3% or lower.

11. The pressure-sensitive adhesive tape or sheet according to claim 10, which is for use in fixing a liquid crystal display module unit and a backlight unit.

12. A liquid crystal display apparatus, which comprises:
a liquid crystal display module unit;
a backlight unit, and
the pressure-sensitive adhesive tape or sheet according to claim 10, which fixes the liquid crystal display module unit and the backlight unit.
